# EUROPÄISCHE PATENTSCHRIFT

(11) **EP 2 664 400 B1**
(45) Veröffentlichungstag und Bekanntmachung des Hinweises auf die Patenterteilung: **24.01.2018**
(21) Anmeldenummer: 13001012.7
(22) Anmeldetag: 28.02.2013
(51) Int. Cl.: B23B 27/10

(54) **Schneidwerkzeug**
Cutting tool
Outil de coupe

(30) Priorität: 18.05.2012 DE 202012004900 U
(43) Veröffentlichungstag der Anmeldung: 20.11.2013
(73) Patentinhaber: KARL-HEINZ ARNOLD GmbH, 73760 Ostfildern (DE)
(72) Erfinder: Meditz, Werner, D-72574 Bad Urach (DE); Braun, Harald, D-73061 Ebersbach (DE)
(74) Vertreter: Patentanwälte Magenbauer & Kollegen Partnerschaft mbB

(56) Entgegenhaltungen:
- EP-A1- 2 596 886
- WO-A1-2008/066473
- DE-A1- 3 740 814
- US-A1- 2008 124 180

## Beschreibung

Die Erfindung betrifft ein Schneidwerkzeug gemäß dem Oberbegriff des Patentanspruchs 1 mit einem Schneidkeil zur spanabhebenden Bearbeitung von Werkstücken, mit mindestens einer Schneidkante, die zwischen einer Spanfläche und einer Freifläche gebildet ist, und mit wenigstens einem internen Kühlmittelkanal, über den Kühlmittel zum Schneidkeil transportierbar ist. Ein solches Werkzeug geht beispielsweise aus der EP 2 596 886 A1 hervor, die den Stand der Technik gemäß Artikel 54(3) EPÜ darstellt. Bei der spanabhebenden Bearbeitung von Werkstücken mittels eines Schneidkeils besteht der Bedarf, die Bearbeitungsstelle zu kühlen. Hierzu ist bereits seit langem bekannt, Kühlmittel bzw. Kühlschmierstoff einzusetzen, der dem Schneidkeil zugeführt wird. Hierzu wird im Stand der Technik eine Düse verwendet, aus der Kühlmittel austritt, das dann in Form von Kühlmittelstrahlen mehr oder weniger ungezielt in den Bereich der Bearbeitungsstelle gesprüht wird. Eine derartige Kühlung ist nicht effektiv, da gerade der am heißesten werdende Bereich auf der Spanfläche praktisch nicht erreicht wird, da beispielsweise ein entstehender Span die Kühlmittelstrahlen abschatten.

Aus der DE 692 25 285 ist ein Metallschneidwerkzeug bekannt, bei dem Kühlmittel aus einer internen Kühlmittelleitung austritt und gezielt in den Bereich der Schneidkante gelangt. Diese Druckschrift zielt darauf ab, den Verschleiß an der Freiflanke bzw. Freifläche zu minimieren, indem dort gezielt gekühlt wird.

Aus der WO 2010/079472 A1 ist ein Verfahren zur spanabhebenden Bearbeitung von Werkstücken offenbart, bei der der interne Kühlmittelkanal durch den am Einsatzhalter gelagerten Schneideinsatz hindurchgeführt ist und direkt an der Spanfläche ausmündet. Jedoch ist die Herstellung eines solchen Kühlmittelkanals bei einem aus Hartmetall ausgebildeten Schneideinsatzes relativ aufwendig. Ferner wird der Schneideinsatz geschwächt, wodurch der Verschleiß erhöht ist.

Aufgabe der Erfindung ist es, ein Schneidwerkzeug der eingangs erwähnten Art zu schaffen, das gegenüber Schneidwerkzeugen aus den Stand der Technik eine zuverlässigere und genauere spanabhebende Bearbeitung von Werkstücken erlaubt und eine erhöhte Standzeit also geringeren Verschleiß aufweist, was insgesamt zu einer erhöhten Produktivität führt.

Diese Aufgabe wird durch ein Schneidwerkzeug mit den Merkmalen des unabhängigen Anspruchs 1 gelöst. Weiterbildungen der Erfindung sind in den Unteransprüchen dargestellt.

Das erfindungsgemäße Schneidwerkzeug zeichnet sich dadurch aus, dass das aus ihm austretende Kühlmittel auf der Spanfläche in Richtung zur Schneidkante fließt, derart, dass ein bei der spanabhebenden Bearbeitung entstehender Span unterspült wird.

Im Gegensatz zum Stand der Technik, bei dem Kühlmittel mehr oder weniger ungezielt in Richtung zur Schneidkante transportiert, insbesondere gesprüht wird, erfolgt bei dem erfindungsgemäßen Schneidwerkzeug eine gezielte Zuführung von Kühlmittel bzw. Kühlschmierstoff an die heißeste Stelle bei der spanenden Bearbeitung, die in der Spanfläche liegt. Durch die Orientierung des Kühlmittelkanals derart, dass der bei der spanabhebenden Bearbeitung entstehende Span unterspült wird, wird das aus dem Stand der Technik bekannte Problem vermieden, dass der entstehende Span die gezielte Zuführung von Kühlmittel an die Spanfläche abschattet, d.h. sich der Span zwischen den Kühlmittelstrahlen und der Spanfläche befindet. Die Unterspülung des Spans erzeugt auch einen weiteren Effekt, nämlich eine verbesserte Spanabfuhr. Es erfolgt ein kontrollierter Spanbruch an der Spanfläche. Durch die gezielte Kühlmittelzuführung ist die Kühl- und Spülwirkung gegenüber dem Stand der Technik erhöht. Insgesamt sind mit derartig gekühlten Schneidwerkzeugen höhere Schnittgeschwindigkeiten und Vorschübe möglich. Die Aufbauschneidenbildung wird reduziert und insgesamt wird bei der spanabhebenden Bearbeitung eine höhere Oberflächenqualität erzielt. Die Standzeiten der Schneidwerkzeuge werden erhöht und der Verschleiß minimiert. Insgesamt resultiert daraus eine erhöhte Produktivität. Das Schneidwerkzeug weist einen Einsatzhalter zum lösbaren Festhalten des Schneideinsatzes auf, wobei ein Sitz mit mehreren miteinander korrespondierenden Sitzflächen an Schneideinsatz einerseits und Einsatzhalter andererseits zur Lagerung des Schneideinsatzes am Einsatzhalter vorgesehen ist. Der interne Kühlmittelkanal weist einen der Spanfläche zugeordneten Leit-Kanalabschnitt auf, dessen Kanalwandung einerseits einen Wandabschnitt des Einsatzhalters und andererseits einen Wandabschnitt des Schneideinsatzes aufweist. Die Kanalwandung des Leit-Kanalabschnitts wird vollständig von den miteinander korrespondierenden Wandabschnitten an Einsatzhalter und Schneideinsatz gebildet. Der Leit-Kanalabschnitt des internen Kühlmittelkanals mündet über eine Austrittsmündung in den Bereich der Spanfläche. Es ist möglich, dass die Austrittsmündung ein Stück weit vor der Spanfläche endet und anschließend eine offene Rinne zur Spanfläche hin ausgebildet ist, in der das Kühlmittel dann gezielt an die Spanfläche geführt wird. Alternativ ist es denkbar, dass die Austrittsmündung unmittelbar an der Spanfläche, jedoch nicht in der Spanfläche, angeordnet ist, so dass austretendes Kühlmittel direkt in die Spanfläche fließt. Die Austrittsmündung kann eine Mündungsfläche aufweisen, die schräg, d.h. im Winkel zur Spanfläche ausgerichtet ist. Insgesamt kann die Kanalführung des Kühlmittelkanals und insbesondere des letzten Kanalabschnitts des Kühlmittelkanals, nämlich des Leit-Kanalabschnitts derart ausgestaltet sein, dass austretendes Kühlmittel im Wesentlichen parallel zur Spanfläche fließt, die Spanfläche also überströmt. Gemäß der Erfindung weisen beide Wandabschnitte eine rinnenartige Vertiefung auf. Es ist beispielsweise möglich, dass die rinnenartige Vertiefung am Wandabschnitt des Einsatzhalters eine größere Querschnittsfläche aufweist als die rinnenartige Vertiefung am Schneideinsatz.

Die rinnenartige Vertiefung am Wandabschnitt des Einsatzhalters kann U- oder V-artig ausgestaltet sein. Die auf Seiten des Schneideinsatzes rinnenartige Vertiefung kann ebenfalls U- oder V-artig ausgestaltet sein. An den miteinander korrespondierenden Wandabschnitten von Schneideinsatz und Einsatzhalter sind auch die miteinander korrespondierenden Sitzflächen ausgebildet. Es werden also Wandabschnitte für die Bildung des Leit-Kanalabschnitts verwendet, die ohnehin bereits als zusammengehörige Flächenpaare, nämlich als miteinander korrespondierende Sitzflächen ausgebildet sind. Die Kühlmittelzuführung erfolgt also über den Sitz zwischen Schneideinsatz und Einsatzhalter. Die Sitzflächen sind beidseits der wenigstens einen rinnenartigen Vertiefung ausgebildet. Bei einer Weiterbildung der Erfindung weist der Kühlmittelkanal einen innerhalb des Einsatzhalters verlaufenden Zuführ-Kanalabschnitt auf, der über eine Mündungsöffnung in den Leit-Kanalabschnitt mündet.

Bei einer Weiterbildung der Erfindung liegt die Mündungsöffnung des Zuführ-Kanalabschnitts in der Sitzfläche des Einsatzhalters.

Es ist möglich, dass der Kühlmittelkanal einen innerhalb des Einsatzhalters verlaufenden Versorgungs-Kanalabschnitt aufweist, der einerseits eine Zulauföffnung zur Zuführung von Kühlmittel aufweist und andererseits in den Zuführ-Kanalabschnitt mündet.

Ein bevorzugtes Ausführungsbeispiel der Erfindung ist in der Zeichnung dargestellt und wird im Folgenden näher erläutert. In der Zeichnung zeigen:
- Figur 1: eine perspektivische Darstellung eines bevorzugten Ausführungsbeispiels des erfindungsgemäßen Schneidwerkzeugs,
- Figur 2: eine Seitenansicht des Schneidwerkzeugs von Figur 1,
- Figur 3: eine Seitenansicht auf den Einsatzhalter von Figur 2,
- Figur 4: den Einsatzhalter von Figur 3 mit dem internen Kühlmittelkanal,
- Figur 5: einen Schnitt durch den Einsatzhalter mit Schneideinsatz entlang der Linie V-V aus Figur 3,
- Figur 6: eine vergrößerte Darstellung der Einzelheit X von Figur 5 und
- Figur 7: eine schematische Darstellung eines Schneidwerkzeugs bei der spanabhebenden Bearbeitung eines Werkstücks, wobei verschiedene, teilweise aus dem Stand der Technik bekannte Kühlmittelzuführungen gezeigt sind.

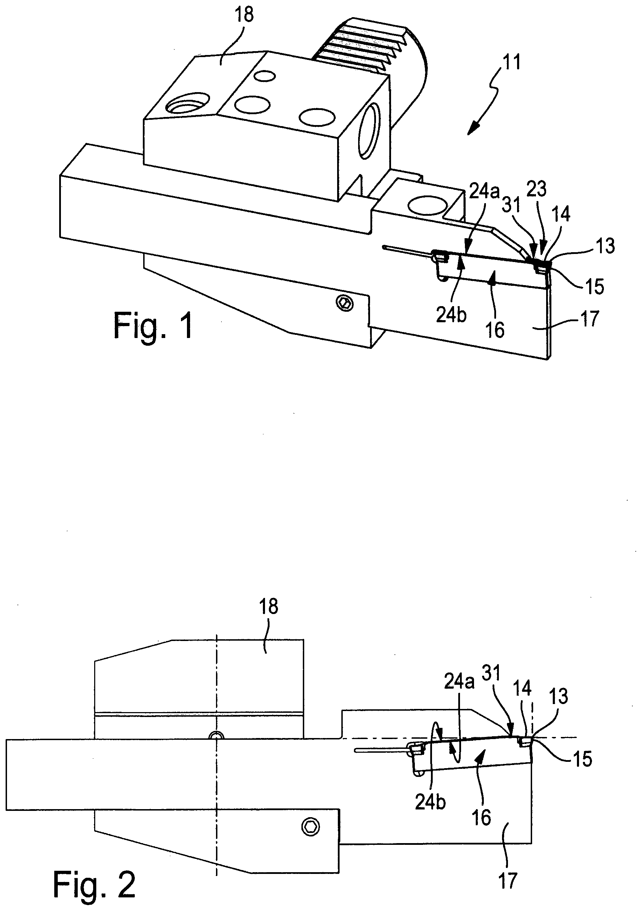

Die Figuren 1 bis 6 zeigen ein bevorzugtes Ausführungsbeispiel des erfindungsgemäßen Schneidwerkzeugs 11. Das Schneidwerkzeug 11 besitzt einen Schneidkeil zur spanabhebenden Bearbeitung von Werkstücken 12. Der Schneidkeil weist mindestens eine Schneidkante 13 auf, die zwischen einer Spanfläche 14 und einer Freifläche 15 gebildet ist.

Das Schneidwerkzeug 11 wird im Folgenden rein beispielhaft in Form eines als Schneideinsatz 16 ausgebildeten Schneidkeils erläutert. Hierzu besitzt das Schneidwerkzeug 11 ferner einen Einsatzhalter 17 zum lösbaren Festhalten des Schneideinsatzes 16. Wie insbesondere in den Figuren 1 und 2 dargestellt, kann der Einsatzhalter 17 in einen Grundhalter 18 eingesetzt und dort befestigt werden, wobei der Grundhalter 18 seinerseits an einer hierfür vorgesehenen Aufnahme einer Werkzeugmaschine, beispielsweise Drehmaschine, befestigbar ist. Mit Einsatzhalter 17 und Schneideinsatz 16 lassen sich je nach Ausgestaltung des Schneideinsatzes 16 und des Einsatzhalters 17 verschiedene spanabhebende Bearbeitungen durchführen. Im Folgenden wird die Erfindung beispielhaft an einem zum Stechdrehen geeignetes Schneidwerkzeug 11 erläutert. Es lässt sich beispielsweise Axial- oder Radial-Stechdrehen durchführen.

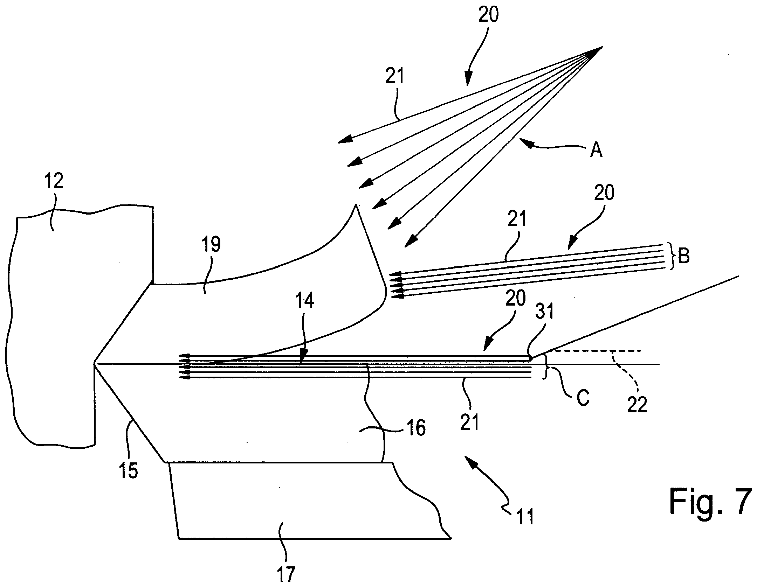

Die Figur 7 zeigt schematisch die Situation bei der spanabhebenden Bearbeitung, also beispielsweise beim Stechdrehen, eines zu bearbeitenden Werkstücks 12. Dabei kommt die Schneidkante 13 in Kontakt mit dem Werkstück 12, das seinerseits beispielsweise beim Drehvorgang rotierend an einer Spindel gelagert ist. Beim Kontakt der Schneidkante 13 mit der zu bearbeitenden Oberfläche des Werkstücks 13 lösen sich Späne 19, gelangen auf die Spanfläche 14 und brechen dann bei einer bestimmten Spanlänge und müssen dann durch geeignete Maßnahmen abtransportiert werden. Die heißeste Zone bei der spanabhebenden Bearbeitung eines solchen Werkstücks 12 befindet sich nicht unmittelbar an der Schneidkante 13, sondern ein Stück weit einwärts an der Spanfläche 14 ungefähr dort, wo sich der Span von der Spanfläche 14 löst. Die Reibung zwischen dem entstehenden Span 19 und der Spanfläche 14 sorgt für die relativ hohe Temperatur in diesem Bereich. Daher besteht dringender Bedarf für eine Kühlung dieses Bereichs. Wie insbesondere in Figur 7 dargestellt, wird dem Schneideinsatz Kühlmittel 20 zugeführt, der bei den Varianten aus dem Stand der Technik beispielsweise über eine im Grundhalter angeordnete Kühlmitteldüse bereitgestellt wird. Bei einer derartigen externen Kühlung tritt das Kühlmittel aus der Düse aus, wobei die Kühlmittelstrahlen mehr oder weniger ungezielt in Richtung zur Schneidkante 13 gerichtet sind. Wie insbesondere bei der aus dem Stand der Technik bekannten Variante A gezeigt, erreichen die Kühlmittelstrahlen 21 die heiße Zone an der Spanfläche 14 nicht, da der entstehende Span 19 gerade diese heiße Zone abschattet. Bei der aus dem Stand der Technik bekannten Variante B ist anstelle dieser externen Kühlung eine interne Kühlung eingesetzt, wobei im Einsatzhalter 17 wenigstens ein Kühlmittelkanal 22 ausgebildet ist. Wie zu erkennen ist, sind diese Kühlmittelstrahlen 21 zwar etwas zielgerichteter, jedoch treffen sie ebenfalls nicht die heiße Zone an der Spanfläche, sondern prallen am Span 19 ab.

Die Erfindung setzt nun an diesem Problem an. Das Schneidwerkzeug 11 besitzt hierzu einen internen Kühlmittelkanal 22, der derart orientiert ist, dass das aus ihm austretende Kühlmittel 20 auf der Spanfläche 14 in Richtung zur Schneidkante 13 fließt, derart, dass ein bei der spanabhebenden Bearbeitung entstehender Span 19 unterspült wird.

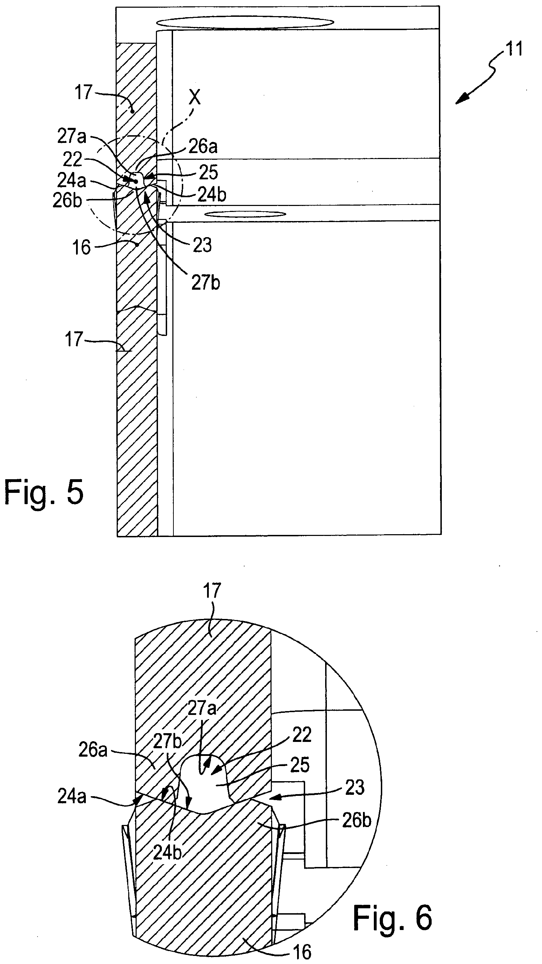

Wie insbesondere in den Figuren 5 und 6 zu erkennen, erfolgt die Kühlung hierbei am Sitz 23, der zwischen dem Einsatzhalter 17 und dem Schneideinsatz 16 ausgebildet ist. Der Sitz 23 weist mehrere miteinander korrespondierende Sitzflächen 24a, 24b am Schneideinsatz 16 einerseits und Einsatzhalter 17 andererseits zur Lagerung des Schneideinsatzes 16 am Einsatzhalter 17 auf.

Wie weiter insbesondere in den Figuren 5 und 6 gezeigt, besitzt der interne Kühlmittelkanal 22 einen der Spanfläche 14 zugeordneten Leit-Kanalabschnitt 25b der vollständig von miteinander korrespondierenden Wandabschnitten 26a, 26b am Einsatzhalter 17 und Schneideinsatz 16 gebildet ist. Dabei befinden sich an beiden Wandabschnitten 26a, 26b jeweils rinnenartige Vertiefungen 27a, 27b, die gemeinsam den Leit-Kanalabschnitt 25 bilden. Zweckmäßigerweise wird in die Sitzfläche 24a des Einsatzhalters 17 eine längliche U- oder V-artig ausgebildete rinnenartige Vertiefung 27a eingeformt. Die rinnenartige Vertiefung 27b auf Seiten des Schneideinsatzes 16 wird durch die ohnehin für den korrekten Sitz der miteinander korrespondierenden Sitzflächen 24a, 24b ausgebildete V-artig oder prismatisch ausgestaltete Sitzfläche 24b des Schneideinsatzes 16 gebildet. Die Fertigung einer rinnenartigen Vertiefung 27a im Einsatzhalter 17 ist in der Regel schneller und kostengünstiger durchzuführen, da dieser im Gegensatz zum Schneideinsatz 16 aus weicherem Material besteht, da der Schneideinsatz 16 in der Regel aus Hartmetall besteht. Die erforderliche Zuführmenge an Kühlmittel 20 zur Spanfläche 14 lässt sich durch Veränderung der Querschnittsfläche des Leit-Kanalabschnitts 25 steuern.

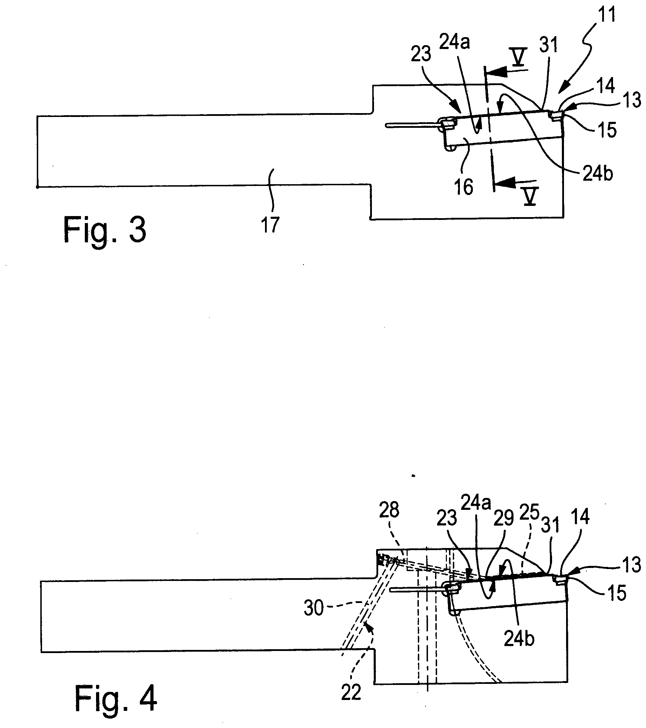

Wie insbesondere in Figur 4 dargestellt, besitzt der interne Kühlmittelkanal 22 zusätzlich zum Leit-Kanalabschnitt 25 noch einen innerhalb des Einsatzhalters 17 verlaufenden Zuführ-Kanalabschnitt 28, der über eine Mündungsöffnung 29 in den Leit-Kanalabschnitt 25 mündet. Wie in Figur 4 gezeigt, liegt die Mündungsöffnung 29 in einer der Sitzflächen 24a, nämlich der mit der rinnenartigen Vertiefung 27a ausgestatteten Sitzfläche 24a des Einsatzhalters 17.

Zusätzlich zum Zuführkanalabschnitt 28 und zum Leit-Kanalabschnitt 25 ist noch ein Versorgungs-Kanalabschnitt 30 vorgesehen, der einerseits eine Zulauföffnung 30, zur Zuführung von Kühlmittel 20 aufweist und andererseits in den Zuführ-Kanalabschnitt 28 mündet.

Wie in Figur 7 unter C gezeigt, befindet sich die Austrittsöffnung 31 des Leit-Kanalabschnitts 25 ein Stück weit von der Spanfläche 14 entfernt oder alternativ grenzt diese Mündungsaustrittsöffnung 31 direkt an die Spanfläche an (nicht dargestellt). Im dargestellten Beispielsfall fließt das austretende Kühlmittel 21 in der schneideinsatzseitigen rinnenartigen Vertiefung 27b, also in einer offenen Rinne geführt zur Spanfläche 14 und überströmt diese. Dabei gelangt Kühlmittel bzw. Kühlschmierstoff direkt zur heißen Zone an der Spanfläche 14. Gleichzeitig wird der entstehende Span 19 unterspült, was zu einem kontrollierten Spanbruch führt. Durch die optimale Kühlung der heißen Zone ergeben sich gegenüber aus dem Stand der Technik bekannten Schneidwerkzeugen 11 erhebliche Vorteile im Hinblick auf die Standzeit. Der Werkzeugverschleiß wird insgesamt deutlich reduziert, was zu einer erheblichen Steigerung der Produktivität führt.

## Patentansprüche

1. Schneidwerkzeug, mit einem Einsatzhalter (17) zum lösbaren Festhalten eines austauschbaren Schneideinsatzes (16) zur spanabhebenden Bearbeitung von Werkstücken (12), und mit dem Schneideinsatz (16), der mindestens eine Schneidkante (13) aufweist, die zwischen einer Spanfläche (14) und einer Freifläche (15) gebildet ist, wobei ein Sitz (23) mit mehreren miteinander korrespondierenden Sitzflächen (24a, 24b) an Schneideinsatz (16) einerseits und Einsatzhalter (17) andererseits zur Lagerung des Schneideinsatzes (16) am Einsatzhalter (17) vorgesehen ist, und mit wenigstens einem internen Kühlmittelkanal (22), über den Kühlmittel (20) zur Schneidkante (13) transportierbar ist, wobei der interne Kühlmittelkanal (22) einen der Spanfläche (14) zugeordneten Leit-Kanalabschnitt (25) aufweist, dessen Kanalwandung vollständig von miteinander korrespondierenden Wandabschnitten (26a, 26b) an Einsatzhalters (17) und Schneideinsatzes (16) gebildet ist, an denen auch die miteinander korrespondierenden Sitzflächen (24a, 24b) ausgebildet sind, und wobei in wenigstens einem der Wandabschnitte (26a) eine rinnenartige Vertiefung (27a) ausgebildet ist, so dass das aus dem Leit-Kanalabschnitt (25) austretende Kühlmittel (20) auf der Spanfläche (14) in Richtung zur Schneidkante (13) fließt, wobei die Sitzflächen (24a, 24b) beiderseits der wenigstens einen rinnenartigen Vertiefung (27a) ausgebildet sind, **dadurch gekennzeichnet, dass** beide Wandabschnitte (26a,26b) eine rinnenartige Vertiefung (27a,27b) aufweisen.

2. Schneidwerkzeug nach Anspruch 1, **dadurch gekennzeichnet, dass** die rinnenartige Vertiefung (27a) am Wandabschnitt (26a) des Einsatzhalters (17) eine größere Querschnittsfläche aufweist als die rinnenartige Vertiefung (27b) am Schneideinsatz (16).

3. Schneidwerkzeug nach einem der vorhergehenden Ansprüche, **dadurch gekennzeichnet, dass** die rinnenartige Vertiefung (27a) am Wandabschnitt (26a) des Einsatzhalters (17) U- oder V-artig ausgestaltet ist.

4. Schneidwerkzeug nach einem der vorhergehenden Ansprüche, **dadurch gekennzeichnet, dass** der Kühlmittelkanal (22) einen innerhalb des Einsatzhalters (17) verlaufenden Zuführ-Kanalabschnitt (28) aufweist, der über eine Mündungsöffnung (29) in den Leit-Kanalabschnitt (25) mündet.

5. Schneidwerkzeug nach Anspruch 4, **dadurch gekennzeichnet, dass** die Mündungsöffnung (29) in einer der Sitzflächen (24a, 24b) des Einsatzhalters (17) liegt.

6. Schneidwerkzeug nach einem der Ansprüche 4 oder 5, **dadurch gekennzeichnet, dass** der Kühlmittelkanal (22) eine innerhalb des Einsatzhalters (17) verlaufenden Versorgungs-Kanalabschnitt (30) aufweist, der einerseits eine Zulauföffnung zur Zuführung von Kühlmittel aufweist und andererseits in den Zuführ-Kanalabschnitt (28) mündet.

## Claims

1. Cutting tool with an insert holder (17) for releasable holding of an interchangeable cutting insert (16) for chip-removing machining of workpieces (12), and with the cutting insert (16) which has at least one cutting edge (13) which is formed between a cutting face (14) and a free face (15), wherein a seat (23) with several seat surfaces (24a, 24b) corresponding with one another is provided on the cutting insert (16) on the one hand and the insert holder (17) on the other hand for supporting the cutting insert (16) on the insert holder (17), and with at least one internal cooling medium channel (22) through which cooling medium (20) may be conveyed to the cutting edge (13), wherein the internal cooling medium channel (22) has a guide channel section (25) assigned to the cutting face (14) and with channel walls formed completely of wall sections (26a, 26b) of the insert holder (17) and the cutting insert (16) corresponding with one another, on which also the seat surfaces (24a, 24b) which correspond with one another are formed, and wherein a channel-like recess (27a) is formed in at least one of the wall sections (26a), so that cooling medium (20) issuing from the guide channel section (25) flows on to the cutting face (14) in the direction of the cutting edge (13), wherein the seat surfaces (24a, 24b) are formed on both sides of the at least one channel-like recess (27a), **characterised in that** both wall sections (26a, 26b) have a channel-like recess (27a, 27b).

2. Cutting tool according to claim 1, **characterised in that** the channel-like recess (27a) on the wall section (26a) of the insert holder (17) has a greater cross-sectional surface than the channel-like recess (27b) on the cutting insert (16).

3. Cutting tool according to any of the preceding claims, **characterised in that** the channel-like recess (27a) on the wall section (26a) of the insert holder (17) is U- or V-shaped.

4. Cutting tool according to any of the preceding claims, **characterised in that** the cooling medium channel (22) has a feed channel section (28) running inside the insert holder (17) and which leads via an outlet opening (29) into the guide channel section (25).

5. Cutting tool according to claim 4, **characterised in that** the outlet opening (29) lies in one of the seat surfaces (24a, 24b) of the insert holder (17).

6. Cutting tool according to one of claims 4 or 5, **characterised in that** the cooling medium channel (22) has a supply channel section (30) running inside the insert holder (17) and having on the one hand an inlet port for the supply of cooling medium and leading on the other hand into the the feed channel section (28).

## Revendications

1. Outil de coupe avec un support d'insert (17) pour la retenue détachable d'un insert de coupe remplaçable (16) pour l'usinage par enlèvement de copeaux de pièces (12), et avec l'insert de coupe (16) qui présente au moins une arête de coupe (13), qui est formée entre une face de coupe (14) et une face libre (15), dans lequel un siège (23) avec plusieurs surfaces de siège (24a, 24b) correspondant les unes aux autres sur l'insert de coupe (16) d'une part et le support d'insert (17) d'autre part pour le logement de l'insert de coupe (16) sur le support d'insert (17) est prévu, et avec au moins un canal de moyen de refroidissement (22) interne par l'intermédiaire duquel un moyen de refroidissement (20) peut être transporté vers l'arête de coupe (13), dans lequel le canal de moyen de refroidissement (22) interne présente une section de canal de guidage (25) associée à la face de coupe (14), dont la paroi de canal est entièrement formée par des sections de paroi (26a, 26b) correspondant l'une à l'autre sur le support d'insert (17) et l'insert de coupe (16), sur lesquelles les surfaces de siège (24a, 24b) correspondant les unes aux autres sont aussi réalisées, et dans lequel dans au moins une des sections de paroi (26a) une cavité de type rigole (27a) est réalisée, de sorte que le moyen de refroidissement (20) sortant de la section de canal de guidage (25) s'écoule sur la face de coupe (14) en direction de l'arête de coupe (13), dans lequel les surfaces de siège (24a, 24b) sont réalisées de part et d'autre de l'au moins une cavité de type rigole (27a), **caractérisé en ce que** les deux sections de paroi (26a, 26b) présentent une cavité de type rigole (27a, 27b).

2. Outil de coupe selon la revendication 1, **caractérisé en ce que** la cavité de type rigole (27a) présente sur la section de paroi (26a) du support d'insert (17) une superficie de section plus grande que la cavité de type rigole (27b) sur l'insert de coupe (16).

3. Outil de coupe selon l'une quelconque des revendications précédentes, **caractérisé en ce que** la cavité de type rigole (27a) sur la section de paroi (26a) du support d'insert (17) est configurée en U ou V.

4. Outil de coupe selon l'une quelconque des revendications précédentes, **caractérisé en ce que** le canal de moyen de refroidissement (22) présente une section de canal d'alimentation (28) s'étendant dans le support d'insert (17) qui débouche par l'intermédiaire d'une embouchure (29) dans la section de canal de guidage (25).

5. Outil de coupe selon la revendication 4, **caractérisé en ce que** l'embouchure (29) se trouve dans une des surfaces de siège (24a, 24b) du support d'insert (17).

6. Outil de coupe selon l'une quelconque des revendications 4 ou 5, **caractérisé en ce que** le canal de moyen de refroidissement (22) présente une section de canal d'alimentation (30) s'étendant dans le support d'insert (17), qui présente d'une part une ouverture d'alimentation pour l'alimentation de moyen de refroidissement et débouche d'autre part dans la section de canal d'alimentation (28).
